# EUROPEAN PATENT APPLICATION

(11) **EP 3 915 351 A1**
(43) Date of publication of application: **01.12.2021**
(21) Application number: 19911495.0
(22) Date of filing: 18.12.2019
(51) Int. Cl.: A01C 7/20, A01C 7/10

(54) **SEED-COLLECTION DEVICE FOR A SEED METER, SYSTEM FOR SEPARATING AND DISPENSING SEEDS AND SYSTEM FOR SYNCHRONIZING SEED-CONVEYING MEANS FOR A SEED METER**

(30) Priority: 23.01.2019 BR 102019001328
(71) Applicant: Assy, José Roberto do Amaral, 75690-000 Caldas Novas, Goiás (BR)
(72) Inventor: CHIBA KAWASAKI, Claudio, 01421-902 São Paulo, SP (BR); ALVES DE SOUZA, Duceni, 09981-470 Diadema, SP (BR); DA SILVA PEREIRA, Paulo Ricardo, 03816-130 São Paulo, SP (BR); ASSY, José Roberto Do Amaral, 75690-000 Caldas Novas, Goiás (BR)
(74) Representative: Tansini, Elio Fabrizio
(86) International application number: PCT/BR2019/050545
(87) International publication number: WO 2020/150799

(57) **Abstract**

The present invention relates generally to precision agriculture. More specifically, the invention relates to seed capture, transport and distribution systems in planting fields. The seed capture device for seed meter, in which the seed meter comprises a seed disc with a mechanical contact medium, comprises a first mobile element; and a mechanical energy transmission medium; the mechanical energy transmission medium is associated with the first mobile element and associated with the mechanical contact medium of the seed disc.

## Description

### TECHNICAL FIELD

The present invention relates generally to precision agriculture. More specifically, the invention relates to seed capture, transport and distribution systems in planting fields.

### BACKGROUND

The demand for agricultural products has always been a determining element for the development and sustenance of the global population, such demand has increased over time because of rapid global population growth. In order to serve the world market, farmers have increasingly invested in equipment and technological applications in agricultural implements that provide greater production of agricultural products and, consequently, bring greater income to the farmers.

When it comes to planting on large plots of land, agricultural implements called planters or seeders are generally used. The conventional planters are widely known and enable farmers to distribute the seeds in well-spaced rows and with an ideal depth for consistent germination of each crop.

Most crops have an ideal planting period within which optimal yields are obtained, depending on the crop, this period lasts approximately three weeks. Thus, one of the factors that significantly affect agricultural productivity is the speed of planting that meets the demand for extensive land over a relatively short period.

One of the problems farmers encounter when using agricultural equipment for planting over large areas is maintaining precision in seed distribution as planting speeds increase. More specifically, the seed distribution accuracy with optimal seed spacing decreases substantially as the planter's travel speed increases, resulting in lower crop yields and thereby reduced profit for the farmers.

Systems using seed conveyors are known as, for example, those described in patent documents US2010/0192819 and US2014/0230705. Systems using seed transporters allow higher planting speeds than conventional systems, usually based only on gravity action through seed conductors, while maintaining a high level of accuracy.

However, the known systems still don't guarantee an ideal transition between the meter and the seed transporter, so that, even in a set in which the seed meter performs its functions without errors, failures or doubles can occur in the seed transition between the seed meter and the seed transporter, propagating the failure or double by the seed transporter to the soil distribution. Also, in some conditions of use, for example, with excess graphite and some types of seeds (flat and long corn) do not work properly.

Thus, although apparently functional to date, the conventional systems have some drawbacks and limitations related to maintaining planting accuracy as increasingly higher speeds are demanded.

### SUMMARY

In order to overcome the inconveniences of the conventional systems and achieve the above mentioned objectives, among others, the invention deals with a seed capture device for seed meter, in which the seed meter comprises a rotating disk equipped with a mechanical contact medium, the seed capture device comprises a first movable element; and a mechanical energy transmission medium; and the mechanical energy transmission medium is associated with the first movable element and associated with the mechanical contact medium of the rotating disk.

According to additional or alternative realizations of the invention, the following characteristics, alone or in technically possible combinations, may also be present:
- the mechanical energy transmission medium receives mechanical energy from the rotating disk and transmits it to the first movable element;
- the mechanical contact medium is situated in the peripheral region of the rotating disk;
- the mechanical energy transmission medium comprises one among belt, chain, gear, rotary axle and pulley or combination of at least two of these;
- the first movable element is one between conveyor, wheel, belt, lift and other rotating element;
- the first movable element comprises a capturing element between fins, bristles, teeth, claws, cleave, tweezers, grabbers and resilient surfaces;
- the seed capture device is associated with a seed meter and a seed transport medium;
- the seed capture device comprises an auxiliary element adjacent to the first movable element, the auxiliary element guiding the seeds of the first element into the seed transport medium, the auxiliary element being a second movable element and/or a fixed element;
- the seed transport medium is a transporter or conductor;
- the first movable element is synchronized with the movement of the rotating disk;
- the seed capture device and the rotating disk are combined to form a single element.

Still, the present invention also deals with another system of seed singularization and dispensation that comprises a seed meter equipped with a seed disk; a seed capture device; and a seed transport medium; where the seed capture device is associated with the seed disk; the seed transport medium is positioned adjacent to the seed capture device.

According to additional or alternative realizations of the invention, the following characteristics, alone or in technically possible combinations, may also be present:
the seed capture device is associated with the seed disk by means of a ring envolving the peripheral region of the seed disk or arch that at least partially encompasses a peripheral portion of the disk;
the seed capture disk and the seed disk form a dockable assembly in the seed meter as a single piece; and
the seed disk, seed capture device and seed transport medium are synchronized at different speeds.

Still, the present invention also deals with another system of seed singularization and dispensation that comprises a seed meter equipped with a seed disk; a seed capture device; and a seed transport medium; of which the seed singularization and dispensation system comprises an element of seed acceleration.

According to additional or alternative realizations of the invention, the following characteristics, alone or in technically possible combinations, may also be present:
the seed acceleration element is associated adjacent to the seed disk;
the seed acceleration element is associated to the seed transport medium, and in a realization the seed acceleration element is associated to the seed transport medium in a region of seed release to the soil.

The present invention also deals with a seed transport synchronization system for seed meter, in which the seed meter comprises a seed disk equipped with a plurality of seed holes radially spaced around an axis; the transport medium comprises a means of synchronization of movement in relation to the rotation movement of the seed disk.

According to additional or alternative realizations of the invention, the following characteristics, alone or in technically possible combinations, may also be present:
the synchronization medium comprises at least two sensors for detecting a disk parameter and a transport medium parameter, the parameters being predefined from speed, position, distance relative to a pre-determined reference;
the drive of the seed disk and the means of transportation are performed by independent energy sources, each energy source is one among electric motor, hydraulic motor or mechanical energy obtained from the rotation of the planter's wheel in contact with the soil;
the sensors are selected from the optical, magnetic, ultrasonic and mechanical types.

### BRIEF DESCRIPTION OF THE DRAWINGS

The objectives, advantages, technical and functional improvements of the invention will be better understood from the reading of the descriptions of their particular embodiments, made below in relation to the attached figures, which illustrate ways of particular embodiments, and not limiting, in which:
Figure 1 shows a seed meter according to an embodiment of the invention;
Figure 2 shows a front view of a seed disk with a ring according to an embodiment of the invention;
Fig. 3 shows an exploded view of figure 2;
Figure 4 shows a front view of a seed capture device associated with a seed disk according to an embodiment of the invention;
Fig. 5 shows a side view of the assembly of figure 4;
Fig. 6 shows a rear perspective view of the assembly of figure 4;
Fig. 7 shows an exploded view of the assembly of figure 4;
Figure 8 shows a front view of a seed capture device associated with a seed disk and a seed transporter according to an embodiment of the invention;
Figure 9 shows figure 8 with the inside of the seed transporter showing;
Figure 10 shows an amplified perspective view of the assembly of figure 8;
Figure 11 shows an exploded view of the assembly of figure 10;
Figure 12 shows a front view of an assembly according to another embodiment of the invention;
Figure 13 shows a front view of an assembly according to another embodiment of the invention;
Figure 14 shows a front view of an assembly according to another embodiment of the invention;
Figure 15 shows a front view of an assembly according to another embodiment of the invention;
Figure 16 shows an amplified perspective view of figure 15.

### DESCRIPTION OF INVENTION EMBODIMENTS

The invention is now described with respect to its particular embodiments, making reference to the attached figures. In the following figures and description, similar parts are marked with equal reference numbers. The figures are not necessarily in scale, i.e. certain features of the invention may be shown with exaggeration of scale or in some schematic way, as well as details of conventional elements may not be shown in order to illustrate this description more clearly and concisely. The present invention is susceptible to the embodiments in different ways. Specific embodiments are described in detail and shown in the figures, with the understanding that the description is to be regarded as an exemplification of the principles disclosed herein, and is not intended to limit only to what is illustrated and described in this descriptive report. It must be recognized that the different teachings of the embodiments discussed below may be employed separately or in any suitable combination to produce the same technical effects.

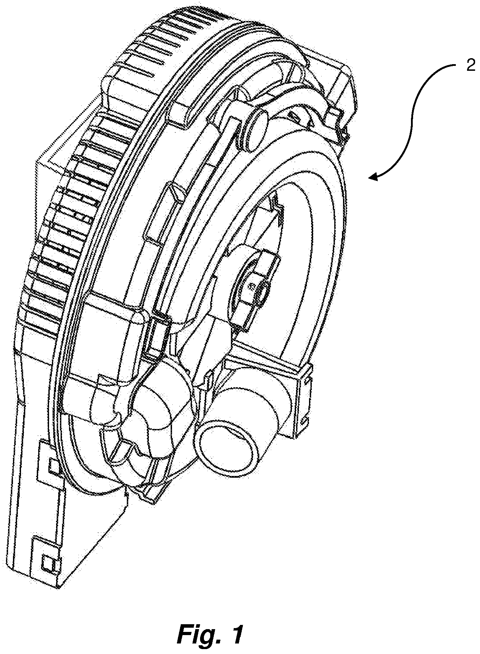

The present invention will be described below in reference to a pneumatic seed meter 2, as in figure 1, as a preferred and non-limiting form of a seed meter 2, within the understanding that seed meters can also be mechanics of honeycombed disks, finger-pickups and other types.

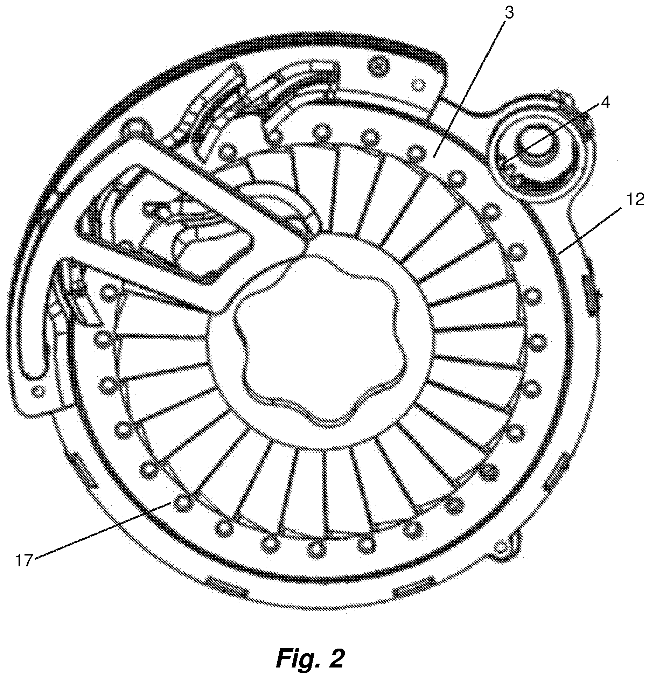

Also in a non-limited way, the seed disks 3 will be described and illustrated according to the preferred ways of embodiment of the invention, being that the dimensions, the number of holes and other ornamental and technical details are given only to facilitate the understanding and don't affect the principle of invention operation. Figures 2, 3 and 4 illustrate in more detail the characteristics of seed disk 3, but the same disk is illustrated in others with less prominence.

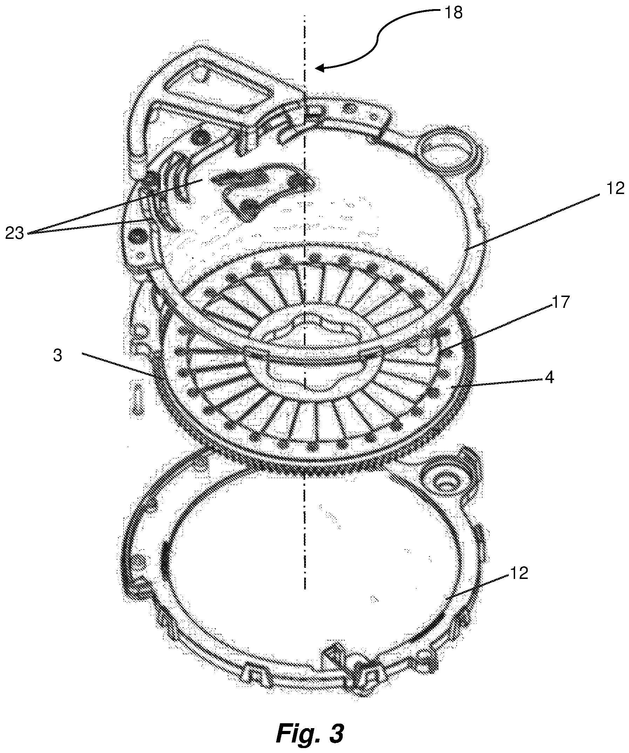

In one embodiment of the invention, as shown in front view in figure 2 and in exploded perspective in figure 3, seed disk 3 is associated with singularizers 23 by means of a ring 12 substantially envolving a peripheral region 7 of seed disk 3 forming a single dockable element in the seed meter 2.

Still in figures 2 and 3, it can be observed that the seed holes 17 are spaced equidistant from each other and have the same distance in relation to a rotation axis of disk 18, forming a single row of trajectory of the seeds during the singularization.

In addition, figures 2 and 3 also illustrate a mechanical contact medium 4 of the seed disk 3. The mechanical contact medium 4 of seed disk 3 is illustrated as a preferred form of embodiment in the peripheral region 7, particularly at the edge of the seed disk in the form of gear teeth.

Although the mechanical contact medium 4 has only been illustrated in the form of gear teeth on the edge of seed disk 3, it should be clear that any means that allows the energy transmission of the rotating movement of seed disk 3 is present in the spirit of this invention, such as, for example, recesses, jumps, other surface patterns and even a smooth surface can be used to achieve the same technical effect.

Also, the mechanical contact medium 4 need not be exactly on the edge of the seed disk 3 but can be positioned on the top and/or bottom surface of the seed disk 3 without affecting the operation of the assembly.

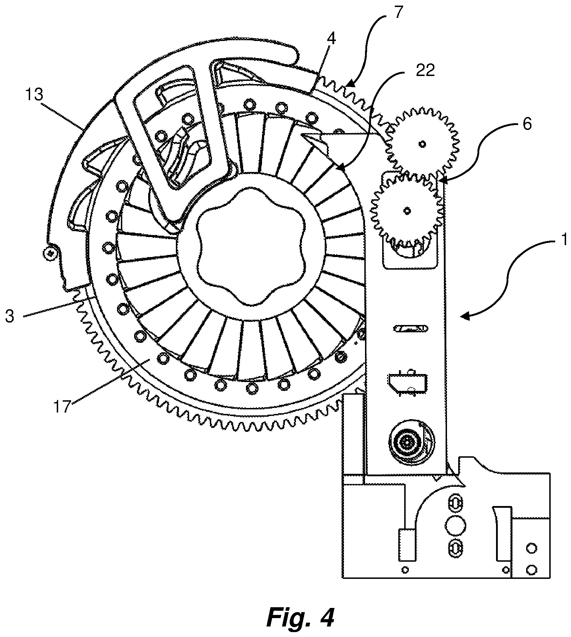

Figure 4 shows an arc 13 which is an alternative to the ring 12 for associating singularizers 23 with seed disk 3, with arc 13 encompassing only a part of the peripheral region 7 of the seed disk 3 and may use a rail system (jump on arch and recess on disk or vice versa) to keep arc 13 attached to seed disk 3.

Also shown in figure 4 is an embodiment of the invention of the seed capture device. In this figure can be observed a mechanical energy transmission medium 6, which is associated to the mechanical contact medium 4 of the seed disk 3 to capture the energy of the rotational movement of seed disk 3 and activate the seed capture device 1.

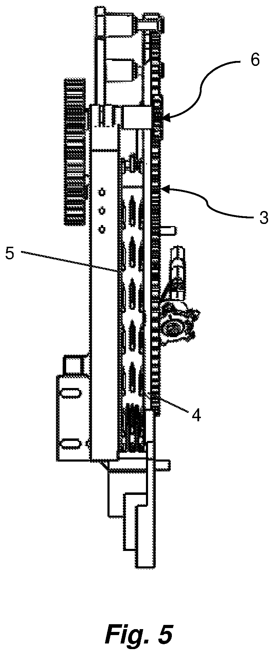

More specifically, the energy captured by the mechanical energy transmission medium 6 is used to drive a first movable element 5 of the seed capture device 1, as illustrated in figures 5, 6 and 7.

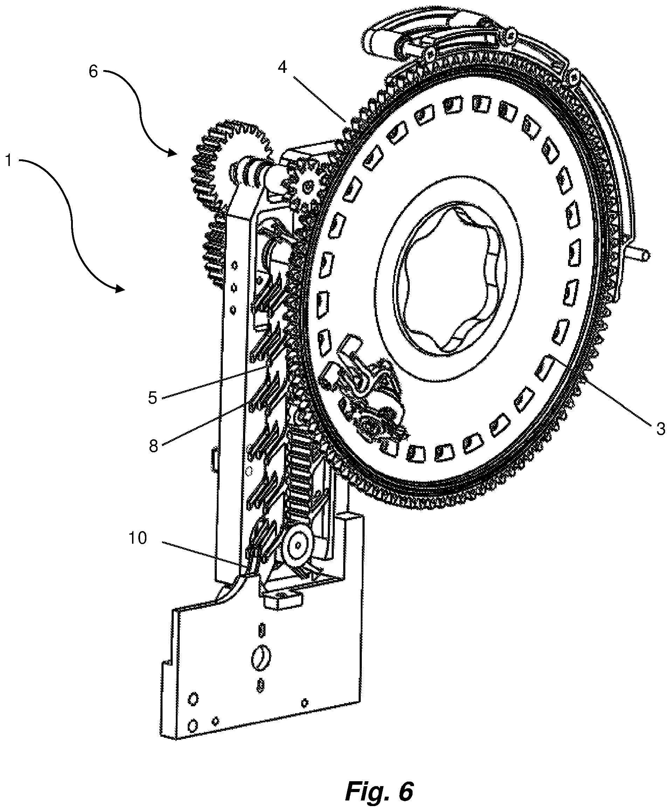

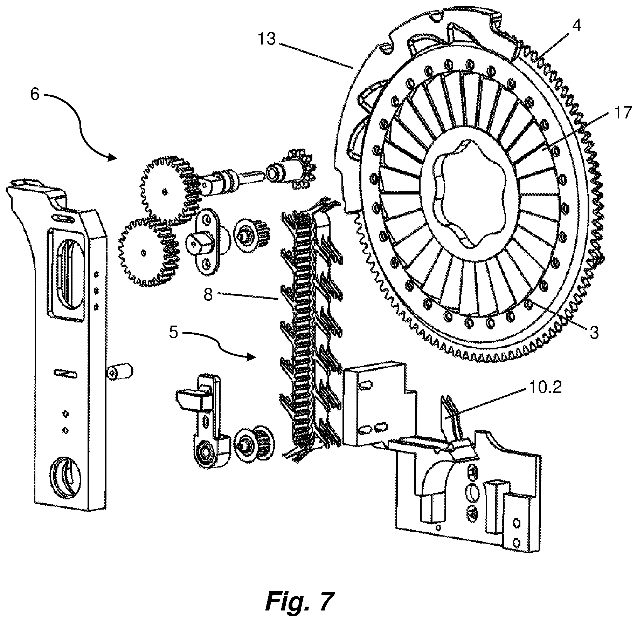

Figures 6 and 7 show in more detail a preferred form of a power transmission medium 6, consisting of gears. A technician in the subject matter must readily understand that other forms, for example, belts, chains, rotary axis, pulleys and a combination of these, can be used alternatively or in combination with the gears without prejudice to the operation of this invention.

The choice of energy transmission medium 6 directly reflects the choice of mechanical contact medium 4 of the seed disk 3, as these two elements form the drive interface of the seed capture device 1.

In a particular embodiment, the seed capture device 1 comprises a seed orientation wall 22 positioned prior to a seed capture region as illustrated exemplarily in figure 4. The orientation wall 22 is positioned adjacent to the passage trajectory of the plurality of seed holes 17 to touch the seeds and provide an ideal positioning of seed capture in the seed holes 17.

Figures 5, 6 and 7 show a preferred form of the first movable element 5 in a belt configuration with a spaced bristle capture element 8.

Although the first movable element 5 is illustrated with only one belt, it should be understood that alternatives such as wheel, belt, lift or other movable elements can be used without departing from the essence of the present invention to achieve the same technical effect.

In one embodiment of the invention the capture element 8 is illustrated in the form of bristles arranged three by three in spaced rows to form a free space that receives the captured seeds. This arrangement of the capture element 8 is the preferred form provided for in the invention and may be replaced by other arrangements of bristles or other elements such as fins, teeth, claws, cleave forceps, graspers and other resilient surface forms without departing from the essence of the present invention.

In general the invention presents particular embodiments for an auxiliary element 10, which assists in the transition of seeds as they exit the seed capture device 1 to be directed to a seed transport medium 9.

In one of the embodiment the auxiliary element 10 is a fixed element 10.2 as illustrated in figures 6 and 7. In this configuration the fixed element 10.2 is formed by two rigid plates configured and positioned between the bristle spaces of the elements 8 of the first movable element 5. With this arrangement the seeds are transported from the seed capture device 1 to the most stable seed transport medium 9 as the seeds are directed upwards into the free spaces between the bristle rows and out of the seed capture device 1 towards the seed transport medium 9.

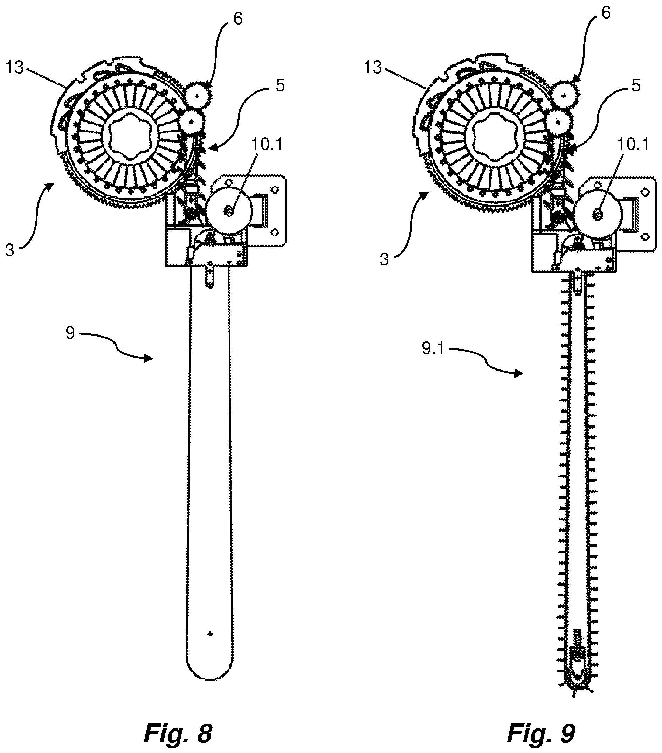

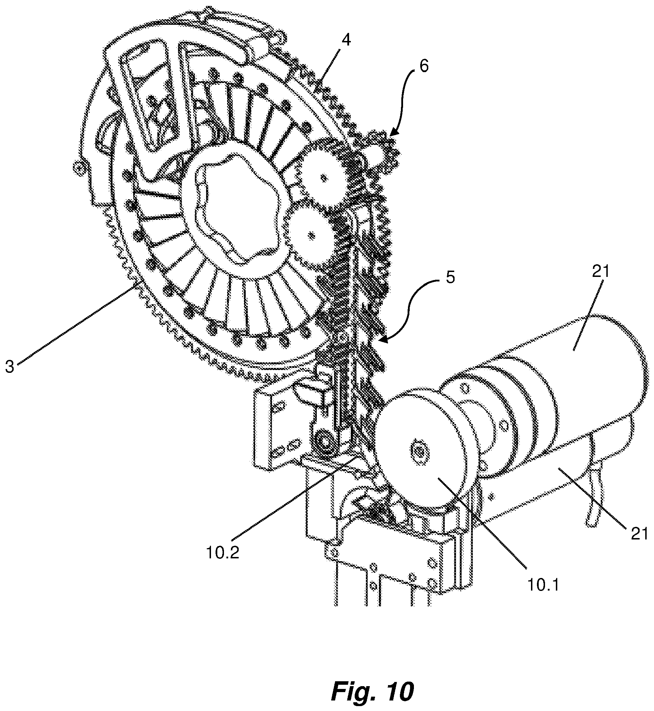

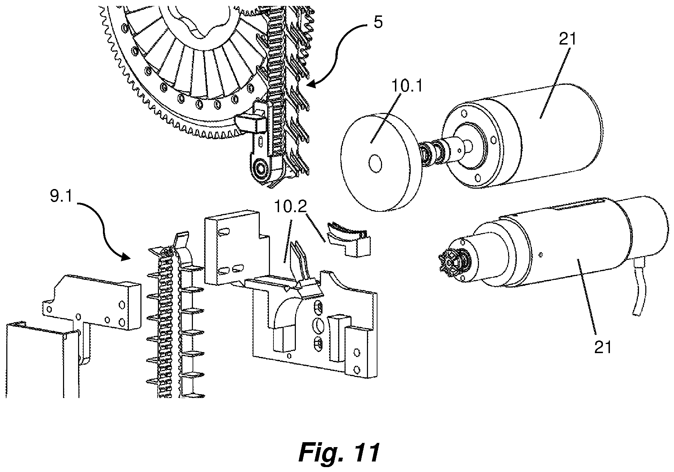

In another embodiment of the present invention, the auxiliary element 10 is a second movable element 10.1. The second movable element 10.1 is illustrated in Figures 8, 9, 10 and 11 as a rotating wheel driven by an independent energy source, but may also be a belt, conveyor or other movable element driven by gears or other forms directly associated with the first movable element 4 or mechanical contact medium of the seed disk 3.

The invention further provides that the seed capture device, seed disk and seed transport medium may be synchronized with each other, but at different speeds. In this way, meter 2 maintains an adequate speed for seed singularization and the seed capture device 1 can be configured for a higher speed that enables seed transition of the meter 2 to the seed trasnporter 10.1, which in turn can reach higher speeds to suit the planter's travel speed.

Also in figures 8, 9, 10 and 11, an embodiment of a seed transport medium 9, particularly a seed transporter 9.1, is illustrated. The illustrated seed transporter is a preferred embodiment a of conveyor with cleaves, but bristles, teeth, claws, fins, tweezers and other graspers that keep the seeds with predetermined spaces can also be used.

In one embodiment of the invention, the capture device 1 is associated on one side with the meter 2 by means of the seed disk 3 and that assembly is associable on the other side with the seed transport medium 9. Thus installation and maintenance are facilitated since the parts of the assembly can be separated independently.

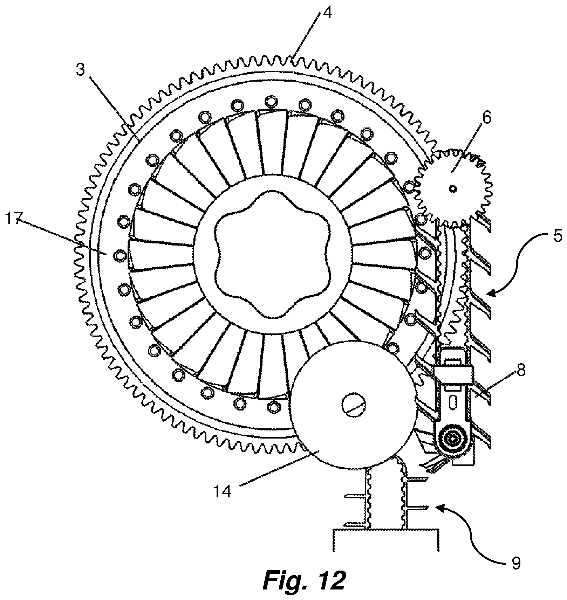

In other embodiments of the invention, means of accelerating the arranged seeds adjacent to the meter 2 and seed transport medium 9 are provided, as illustrated in figures 12, 13 and 14.

Figure 12 illustrates an embodiment in which the seed accelerator is positioned adjacent to meter 2 in the seed passage region of the seed disk 3 to allow the seed capture device 1 to capture the seed even at a higher speed than the seed disk 3.

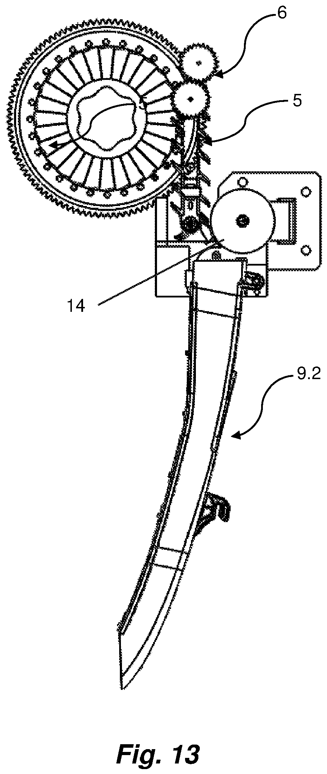

Figure 13 illustrates another embodiment wherein the transport medium 9 is a conductor 9.2. In this configuration the accelerator is positioned at the entrance of conductor 9.2 and is used to control the speed that the seed will be released through the conductor 9.2 to the soil according to the speed of the planter.

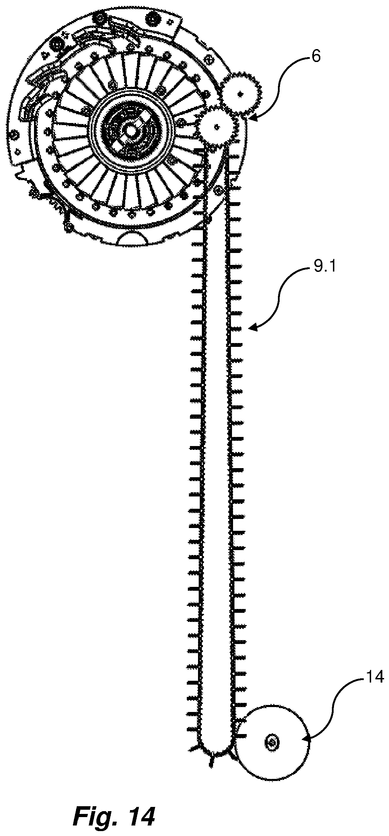

Figure 14 illustrates yet another embodiment wherein the transport medium 9 is a seed transporter 9.1. In this configuration the seed transporter 9.1 captures the seeds directly from the disk and transports to a seed accelerating element 14 positioned at the seed transporter exit 9.1 to control the speed at which seeds will be released directly to the soil according to the planter speed.

The present invention also reveals a synchronization system 16 of a seed transport medium 9 with a seed meter 2. More specifically, the present invention provides a movement synchronization medium 19 of a seed transporter 9.1 with respect to the rotation movement of a seed disk 3.

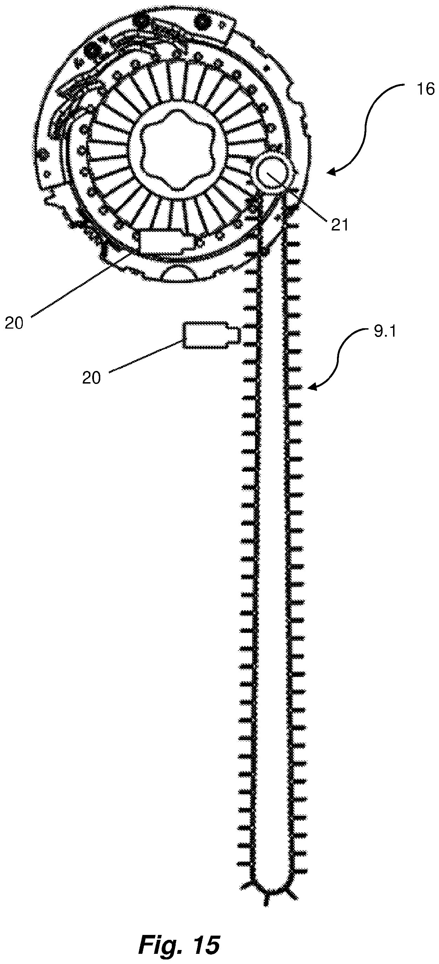

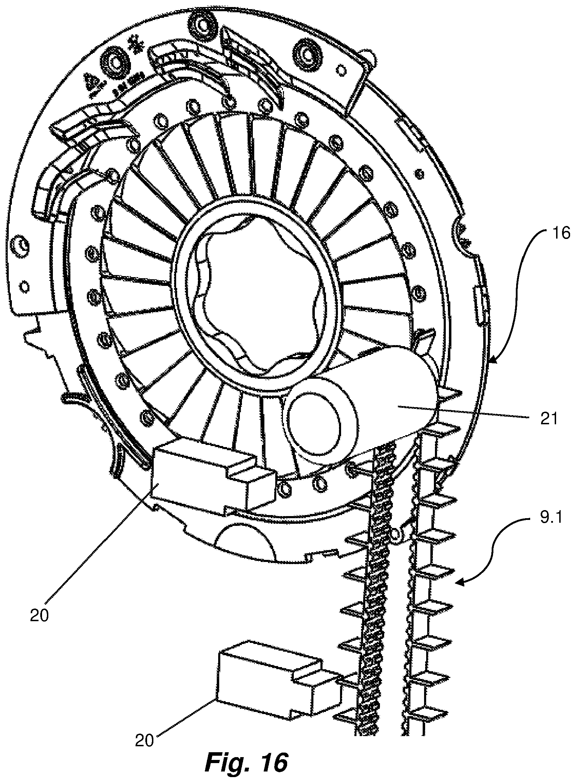

Figures 15 and 16 show a preferred embodiment of the synchronization system of the present invention, wherein two sensors 20 are used, one positioned on the seed disk 3 to detect a parameter of the seed disk 3 and the other positioned on the seed trasnporter 9.1 to detect a seed transporter parameter 9.1.

The parameters provided for in the present invention for detection on both seed disk 3 and seed transporter 9.1 are chosen from velocity, position and relative distance from a predetermined reference point.

In addition to a preferential embodiment, the synchronization system also uses independent driving sources for the seed disk 3 and the seed transporter 9.1, so that it is possible to make it that the seed transporter 9.1 can receive the seeds of the seed disk 3 with precision of adjustment of the free spaces of the seed transporter 9.1 with the holes of the seed disk 3 at the same time that it can maintain the speed of the seed transporter 9.1 adequate to deliver the seeds in the soil compensating the speed of the planter.

Particularly, the synchronism system 16 of the present invention allows that the speed of the seed transporter 9.1 can be controlled so that, if the speed of the seed transporter 9.1 is greater than the rotation of the seed disk 3, the seed transporter 9.1 can compensate the rotation to always coincide a hole 17 of the seed disk 3 with a free space of the transporter 9.1, for example, jumping one or more free spaces of the seed transporter 9.1 and accelerating or decelerating to prevent that the bristles from pushing the seeds inside the meter 2.

In view of the above, an advantage of the present invention is to provide a capture device for an agricultural implement that is capable of eliminating or at least reducing the limitations of conventional technologies.

Another advantage of the present invention is to provide a seed capture medium triggered by the association with a seed meter, particularly using the mechanical rotation energy of the seed meter seed disk.

In addition, it is also an advantage of this invention to provide a synchronization system that relates the feeder speed with the speed of a seed transport medium.

Still, another advantage of the present invention is to provide a means of seed acceleration to adjust the travel speed of the agricultural implement.

It is also an advantage of the present invention to provide a seed capture element that intermediates and associates a seed meter disk with a seed transporter.

Although the invention has been specifically described in relation to particular embodiments, it should be understood that variations and modifications will be evident to technicians in the subject matter and can be done without departing from the scope of protection of the present invention. Consequently, the scope of protection is not limited to the embodiments described, but is limited only by the attached claims, the scope of which must include all equivalents.

## Claims

1. A seed capture device for seed meter, the seed meter comprising a seed disk with a mechanical contact medium, **characterized in that** the seed capture device comprises:
a first movable element; and
a mechanical energy transmission medium;
the mechanical energy transmission medium is associated with the first movable element and associable with the mechanical contact medium of the seed disk.

2. The seed capture device of claim 1, **characterized in that** the mechanical energy transmission medium receives mechanical energy from the seed disk and transmits it to the first movable element.

3. The seed capture device of claim 1, **characterized in that** the mechanical contact medium is in a peripheral region of the seed disk.

4. The seed capture device of claim 1, **characterized in that** the mechanical energy transmission medium comprises one among belt, chain, gear, rotary axle and pulley or combination of at least two of these.

5. The seed capture device of claim 1, **characterized in that** the first moving element is one between conveyor, wheel, belt, lift and other rotating element;

6. The seed capture device of claim 5, **characterized in that** the first moving element comprises a capturing element between fins, bristles, teeth, claws, cleave, tweezers, grabbers and resilient surfaces.

7. The seed capture device of claim 1, **characterized in that** the seed capture device is associated with a seed meter and a seed transport medium.

8. The seed capture device of claim 1, **characterized in that** the seed capture device comprises an auxiliary element adjacent to the first moving element.

9. The seed capture device of claim 8, **characterized in that** the auxiliary element guiding the seeds of the first element into the seed transport medium, the auxiliary element being a second moving element and/or a fixed element.

10. The seed capture device of claim 9, **characterized in that** the seed transport medium is a transporter or conductor.

11. The seed capture device of claim 1, **characterized in that** the first movable element is synchronized with the movement of the seed disk.

12. The seed capture device of claim 1, **characterized in that** the seed capture device and the seed disk are combined to form a single element.

13. A system of seed singularization and dispensation, the system comprising:
a seed meter equipped with a seed disk;
a seed capture device; and
a seed transport medium;
**characterized in that** the seed capture device is associated with the seed disk; and the seed transport medium is positioned adjacent to the seed capture device.

14. The system of seed singularization and dispensation of claim 13, **characterized in that** the seed capture device is associated with the seed disk by means of a ring encompassing the peripheral region of the seed disk or arch that at least partially encompasses a peripheral portion of the disk.

15. The system of seed singularization and dispensation of claim 13, **characterized in that** the seed capture device and the seed disk form a dockable assembly in the seed meter as a single element.

16. The system of seed singularization and dispensation of claim 13, **characterized in that** the seed disk, seed capture device and seed transport medium are synchronized at different speeds from each other.

17. A system of seed singularization and dispensation that comprises:
a seed meter with a seed disk;
a seed capture device; and
a seed transport medium;
**characterized in that** the seed singularization and dispensation system comprises an element of seed acceleration.

18. The system of seed singularization and dispensation of claim 17, **characterized in that** the seed acceleration element is associated adjacent to the seed disk.

19. The system of seed singularization and dispensation of claim 17, **characterized in that** the seed acceleration element is associated to the seed transport medium

20. The system of seed singularization and dispensation of claim 19, **characterized in that** the seed acceleration element is associated to the seed transport medium in a region of seed release to the soil.

21. A seed transport medium synchronization system for seed meter, in which the seed meter comprises a seed disk with a plurality of seed holes radially spaced around an axis.
**characterized in that** the seed transport medium comprises means of synchronization of movement in relation to the rotation movement of the seed disk.

22. The seed transport medium synchronization system of claim 21, **characterized in that** the synchronization medium comprises at least two sensors for detecting a disk parameter and a seed transport medium parameter.

23. The seed transport medium synchronization system of claim 22, **characterized in that** the parameters are predefined from speed, position, distance relative to a pre-determined reference.

24. The seed transport medium synchronization system of claim 21, **characterized in that** the seed disk and the seed transport medium are driven by independent power sources.

25. The seed transport medium synchronization system of claim 24, **characterized in that** each power source is one among electric motor, hydraulic motor or mechanical energy obtained from the rotation of the planter's wheel in contact with the soil.

26. The seed transport medium synchronization system of claim 21, **characterized in that** the sensors are at least one of an optical, a magnetic, an ultrasonic and a mechanical types.
